# EUROPEAN PATENT APPLICATION

(11) **EP 4 593 210 A1**
(43) Date of publication of application: **30.07.2025**
(21) Application number: 24223759.2
(22) Date of filing: 30.12.2024
(51) Int. Cl.: H01R 13/52, H01R 13/631

(54) **SOCKET, ELECTRICAL CONNECTOR, BATTERY PACK AND ELECTRIC DEVICE**

(30) Priority: 29.01.2024 CN 202420212893 U
(71) Applicant: Nio Technology (Anhui) Co., Ltd, Hefei City, Anhui 230601 (CN)
(72) Inventor: ZHAO, Yefei, Hefei City, Anhui, 230601 (CN); YAN, Chunxiao, Hefei City, Anhui, 230601 (CN); ZHANG, Julin, Hefei City, Anhui, 230601 (CN); YAO, Tingting, Hefei City, Anhui, 230601 (CN)
(74) Representative: Vossius & Partner Patentanwälte Rechtsanwälte mbB

(57) **Abstract**

The invention provides a socket, an electrical connector, a battery pack and an electric device, the socket including an insertion end and a tail end, the direction from the insertion end to the tail end being a first direction, and the insertion end being configured for connection with a plug. The plug includes a high-voltage pin and a low-voltage pin, and the socket includes a first housing, and a high-voltage inserthole assembly and a low-voltage inserthole assembly provided on the first housing; the high-voltage inserthole assembly is configured for electrical connection to the high-voltage pin, and the low-voltage inserthole assembly is configured for electrical connection to the low-voltage pin; the socket further includes a wiring harness, the wiring harness being electrically connected to the low-voltage inserthole assembly; and the socket further includes a first sealing gasket and a first cover, the first cover being provided on the first sealing gasket for pressing the first sealing gasket, the first sealing gasket being provided with a first through hole, the first cover being provided with a second through hole, and the wiring harness passing through the first through hole and the second through hole in sequence. The wiring harness is limited by a wall of the second through hole and does not deflect substantially, thereby ensuring an effective seal between the wiring harness and the first sealing gasket.

## Description

### Technical Field

The invention relates to the field of connectors, and particularly provides a socket, an electrical connector, a battery pack and an electric device.

### Technical Background

An electrical connector is a connecting bridge, is a basic component necessary for a complete system, and plays a very important role in electrical equipment. With the expansion of the application field of electrical equipment, the application environment of the electrical connector has also been expanded, for example, to a new energy vehicle.

The electrical connector is divided into a plug and a socket, which are plugged to complete an electrical connection. The electrical connector for a new energy vehicle is divided into a plug connected with a battery end, a socket connected with a vehicle end and a plug connected with a station end, where the station end is an interface for charging a battery pack in a battery swap station.

In addition to achieving electrical transmission through a high-voltage terminal, the plug and the socket also require a signal detection transmission function through a low-voltage terminal, such as the transmission of battery pack temperature sensing, internal battery pack temperature sensing, and battery pack discharge signal data, etc. However, in the prior art, the issue of a seal failure around a wiring harness connected to the low-voltage terminal is quite serious, and is a pressing problem in the field that needs to be addressed urgently.

### Summary

In response to the issue of a seal failure around a wiring harness in the prior art, the invention provides a socket including an insertion end and a tail end, the direction from the insertion end to the tail end being a first direction, and the insertion end being configured for connection with a plug including a high-voltage pin and a low-voltage pin, the socket including a first housing, and a high-voltage inserthole assembly and a low-voltage inserthole assembly provided on the first housing; where the high-voltage inserthole assembly is configured for electrical connection to the high-voltage pin, and the low-voltage inserthole assembly is configured for electrical connection to the low-voltage pin; the socket further includes a wiring harness electrically connected to the low-voltage inserthole assembly; and the socket further includes a first sealing gasket and a first cover, the first cover being provided on the first sealing gasket for pressing the first sealing gasket, the first sealing gasket being provided with a first through hole, the first cover being provided with a second through hole, and the wiring harness passing through the first through hole and the second through hole in sequence.

In an optional technical solution of the invention, the first sealing gasket is provided with a plurality of first through holes, and the first cover is provided with a plurality of second through holes, the first through holes and the second through holes being equal in number.

In an optional technical solution of the invention, the first through holes and the second through holes are arranged correspondingly in the first direction. The first through hole and the second through hole have an axial distance D ≤ 0.3 mm.

In an optional technical solution of the invention, the wall of the second through hole protrudes from the first cover in the first direction.

In an optional technical solution of the invention, a wall height H of the second through hole satisfies: 3 mm ≤ H ≤ 5 mm.

In an optional technical solution of the invention, an inner wall of the first through hole is provided with a first protrusion.

In an optional technical solution of the invention, the socket further includes a second cover covering the first cover.

In an optional technical solution of the invention, the socket further includes a second housing and a third housing, the second housing and the third housing being connected to fix the low-voltage inserthole assembly, an accommodating groove being provided on a side of the second housing away from the third housing, the first sealing gasket being provided in the accommodating groove, and the first cover being fixed to the second housing.

In an optional technical solution of the invention, the second housing is provided with an elastic first limiting member, and an included angle β between the first limiting member and the first direction is an acute angle. The first housing is provided with a third through hole, a wall of the third through hole includes a first wall extending in the first direction and a second wall extending in a second direction, and the first limiting member is engaged with the second wall. The included angle β satisfies: 12° ≤ β ≤ 20°. A length L of the second wall in the second direction satisfies: 0.7 mm ≤ L ≤ 1.5 mm.

The invention further provides an electrical connector, including a socket described above and a plug.

The invention further provides a battery pack, including a socket described above.

The invention further provides an electric device, including a socket described above.

### Brief Description of the Drawings

FIG. 1 and FIG. 2 are cross-sectional views of a socket;
FIG. 3 is a partial enlarged view of FIG. 1;
FIG. 4 is a perspective view of a socket;
FIG. 5 is an exploded view of FIG. 4; and
FIG. 6 is an exploded view of a low-voltage quick-insert module of FIG. 5.

### List of reference numerals

Insertion end 1;
Tail end 2;
First housing 3;
Third through hole 31;
Low-voltage inserthole assembly 4;
Wiring harness 5;
First sealing gasket 6;
   First through hole 61;
   First protrusion 62;
   Second protrusion 63;
First cover 7;
   Second through hole 71;
   First engagement portion 72;
Low-voltage quick-insert module 8;
   Second housing 81;
      Accommodating groove 811;
      Second engagement portion 812;
      First limiting member 813;
   Third housing 82;
   Second sealing gasket 83;
Second cover 9.

### Detailed Description of Embodiments

The optional implementations of the invention are described below with reference to the accompanying drawings. It should be understood by those skilled in the art that these implementations are only for explaining the technical principles of the invention and are not intended to limit the scope of protection of the invention.

It should be understood that, in the description of the invention, the terms that indicate the orientation or positional relationship, such as "distance", "width", "thickness", "upper", "lower", "left", "right", "inner" and "outer", are based on the orientation or positional relationship shown in the figures, which is merely intended to facilitate and simplify the description of the invention rather than indicating or implying that the device or element must have a particular orientation and be constructed and operated in a particular orientation, and therefore should not be construed as limiting the invention.

In the description of the invention, the terms "first", "second", "third" and "fourth" are used for descriptive purposes only, and cannot be construed as indicating or implying relative importance or implicitly indicating the number of technical features indicated. In the description of the invention, the phrase "a plurality of" means at least two, such as two, three, etc., unless otherwise specifically defined.

In addition, it should also be noted that, in the description of the invention, the terms "dispose" and "connect" should be interpreted in a broad sense unless explicitly defined and limited otherwise. For example, a connection may be a fixed connection, a detachable connection, or an integral connection; and may be a direct connection, an indirect connection by means of an intermediary, or internal communication between two elements. For those skilled in the art, the specific meaning of the above-mentioned terms in the invention can be interpreted according to the specific situation.

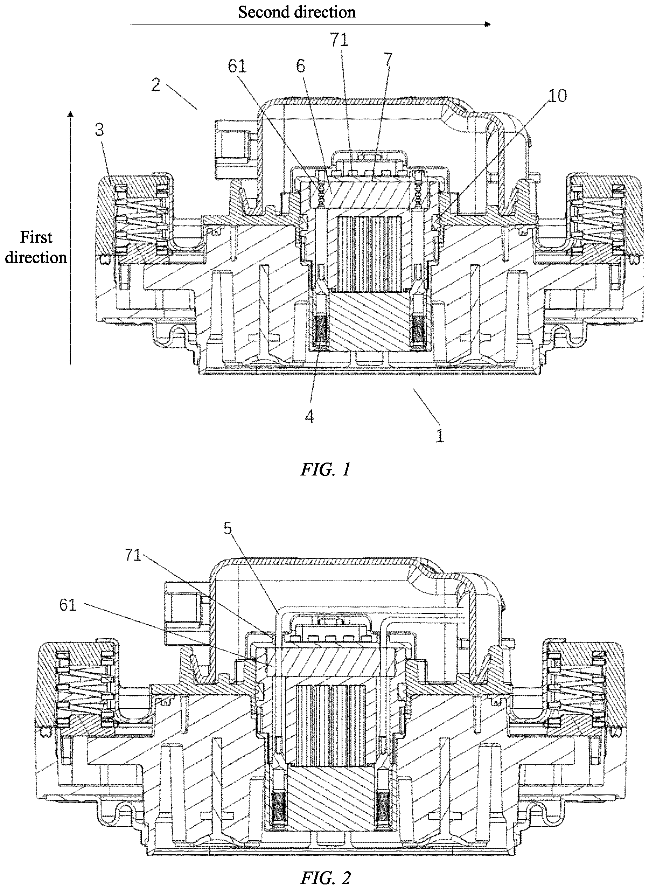

As shown in FIGS. 1 and 2, the invention provides a socket including an insertion end 1 and a tail end 2, the direction from the insertion end 1 to the tail end 2 being a first direction, and the insertion end 1 being configured for connection with a plug. The plug (not shown) includes a high-voltage pin and a low-voltage pin, and the socket includes a first housing 3, and a high-voltage inserthole assembly (not shown) and a low-voltage inserthole assembly 4 provided on the first housing 3; where the high-voltage inserthole assembly is configured for electrical connection to the high-voltage pin, and the low-voltage inserthole assembly 4 is configured for electrical connection to the low-voltage pin; the socket further includes a wiring harness 5, the wiring harness 5 being electrically connected to the low-voltage inserthole assembly 4; and the socket further includes a first sealing gasket 6 and a first cover 7, the first cover 7 being provided on the first sealing gasket 6 for pressing the first sealing gasket 6, the first sealing gasket 6 being provided with a first through hole 61, the first cover 7 being provided with a second through hole 71, and the wiring harness 5 passing through the first through hole 61 and the second through hole 71 in sequence. The first sealing gasket 6 achieves a sealing function by blocking a gap through an elastic deformation, and if the wiring harness 5 deflects substantially, the gap between the wiring harness and the first sealing gasket 6 may cause the sealing to fail. The wiring harness 5 passes through the first through hole 61 of the first sealing gasket 6 and the second through hole 71 of the first cover 7 in sequence, and the wiring harness 5 is limited by a wall of the second through hole 71 and does not deflect substantially, thereby ensuring an effective seal between the wiring harness 5 and the first sealing gasket 6.

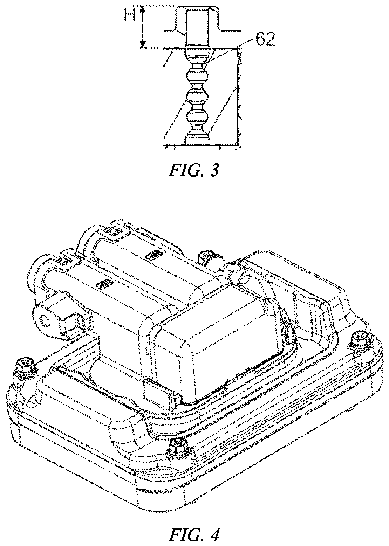

In an optional embodiment of the invention, as shown in FIGS. 1-3, an inner wall of the first through hole 61 is provided with a first protrusion 62. Specifically, in the first direction, a plurality of annular first protrusions 62 may be provided in the first through hole 61, and when the wiring harness 5 passes through the first through hole 61, the wiring harness 5 may press the annular first protrusions 62, thereby forming a sealing structure in the first through hole 61 in the first direction, and improving the sealing capability.

In an optional embodiment of the invention, as shown in FIG. 1, the first sealing gasket 6 is provided with a plurality of first through holes 61, and the first cover 7 is provided with a plurality of second through holes 71, the first through holes 61 and the second through holes 71 being equal in number.

In an optional embodiment of the invention, as shown in FIG. 1, the first through holes 61 and the second through holes 71 are arranged correspondingly in the first direction. If the second through holes 71 and the first through holes 61 are misaligned in a second direction, the wiring harness 5 is limited by the wall of the second through hole 71 and may deflect substantially in the first through hole 61, and the wiring harness 5 is pressed against the wall of one side of the first through hole 61 and forms a large gap with the wall of the other side, which affects seal reliability. The first through holes 61 and the second through holes 71 are correspondingly arranged on a one-to-one basis in the first direction, including a coaxial arrangement, and of course, the axis of the second through hole 71 and the axis of the first through hole 61 may be misaligned by a small amount, as long as the distance D between the axes of the first through hole 61 and the second through hole 71 is less than or equal to 0.3 mm.

In an optional embodiment of the invention, as shown in FIG. 1, the wall of the second through hole 71 protrudes from the first cover 7 in the first direction, and a wall height H of the second through hole 71 satisfies: 3 mm ≤ H ≤ 5 mm. Setting H in the above numerical range may effectively solve the sealing problem caused by the deflection of the wiring harness, while the first cover 7 does not occupy too much space in the first direction. The wall provided with the second through hole 71 protrudes from the first cover 7 in the first direction, which may meet the dimensional requirements of H while also preventing the thickness of the first cover 7 from being too large, and the weight of the first cover 7 may be reduced, thereby saving on costs.

In an optional embodiment of the invention, as shown in FIGS. 1 and 4-6, the socket includes a first housing 3, a high-voltage inserthole assembly, a low-voltage quick-insert module 8 and a second cover 9. The first housing 3 is provided with a third through hole 31, the low-voltage quick-insert module 8 is mounted in the third through hole 31, and the second cover 9 is fixed to the first housing 3 and covers the low-voltage quick-insert module, which can be used for dust protection.

Specifically, the low-voltage quick-insert module 8 includes, in addition to the low-voltage inserthole assembly 4, a second housing 81 and a third housing 82, the second housing 81 and the third housing 82 being connected to hold the low-voltage inserthole assembly 4. An accommodating groove 811 is provided on a side of the second housing 81 away from the third housing 82, and the first sealing gasket 6 is provided in the accommodating groove 811. A second protrusion 63 is provided at an outer periphery of the first sealing gasket 6, and the second protrusion 63 is deformed by the pressing of the second housing 81, thereby acting as a seal. The first cover 7 is provided with a first engagement portion 72, and the second housing 81 is provided with a second engagement portion 812, the first cover 7 and the second housing 81 being fixed by the connection of the first engagement portion 72 and the second engagement portion 812. A second sealing gasket 83 is also provided outside the second housing 81, and the second sealing gasket 83 is configured to seal the connection between the low-voltage quick-insert module and the first housing 3.

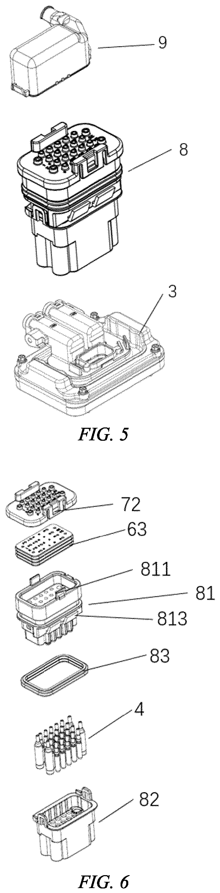

In an optional embodiment of the invention, as shown in FIGS. 5 and 6, the second housing 81 is provided with an elastic first limiting member 813, and an included angle β between the first limiting member 813 and the first direction is an acute angle. A wall of the third through hole 31 includes a first wall extending in the first direction and a second wall extending in the second direction, the first limiting member 813 being engaged with the second wall. Specifically, the included angle β satisfies: 12° ≤ β ≤ 20°. A length L of the second wall in the second direction satisfies: 0.7 mm ≤ L ≤ 1.5 mm. If the value of β is too large, it is difficult for the low-voltage quick-insert module 8 to be inserted into the third through hole 31, and forcing the insertion may cause the first limiting member 813 to break. If the value of β is too small, it is difficult to form an effective limiting function with the second wall. Setting β within the above numerical range may ensure that the first limiting member 813 deforms within an appropriate range and may effectively limit the movement of the low-voltage quick-insert module 8 in the direction opposite to the first direction. Specifically, β may be 12°, 14°, 15°, 16°, 17°, 18°, or 20°. If the value of L is too large, the space allowing the low-voltage quick-insert module 8 to pass through becomes smaller, and the first limiting member 813 needs to deform significantly to be inserted, which may damage the first limiting member 813. If the value of L is too small, the limiting effect between the first limiting member 813 and the second wall is not reliable. Limiting the value of L to the above numerical range allows the first limiting member 813 to deform within an appropriate range while securely engaging the second wall. Specifically, L may be 0.7 mm, 0.9 mm, 1.2 mm, 1.3 mm, or 1.5 mm.

The invention further provides an electrical connector, including a plug described above and a socket described above.

The invention further provides a battery pack, including a socket described above.

The invention further provides an electric device, including a socket described above. That is, the socket may be provided on either of the battery pack and the electric device, and the corresponding plug on the other. The electric device may be an electric vehicle, etc.

The invention further provides an electric device. The electric device of the invention includes a battery pack of an optional embodiment. The battery pack is configured to provide balanced mechanical stress on battery cells, and thus the cycle life of the battery pack is improved. The electric device may be, but is not limited to, a mobile phone, a tablet, a laptop, an electric toy, an electric tool, an electromobile, an electric vehicle, a ship, a spacecraft, etc. The electric toy may include a stationary or mobile electric toy, for example, a gaming machine, an electric vehicle toy, an electric ship toy and an electric aircraft toy, etc., and the spacecraft may include an airplane, a rocket, a space shuttle and a spaceship, etc.

Heretofore, the technical solutions of the invention have been described in conjunction with the optional implementations shown in the drawings, however, those skilled in the art can readily understand that the scope of protection of the invention is clearly not limited to these specific implementations. Those skilled in the art could make equivalent changes or substitutions to the related technical features without departing from the principles of the invention, and all the technical solutions after the changes or the substitutions fall within the scope of protection of the invention.

## Claims

1. A socket, which comprises an insertion end and a tail end, the direction from the insertion end to the tail end being a first direction, and the insertion end being configured for connection with a plug comprising a high-voltage pin and a low-voltage pin, the socket comprising a first housing, and a high-voltage inserthole assembly and a low-voltage inserthole assembly provided on the first housing;
wherein the high-voltage inserthole assembly is configured for electrical connection to the high-voltage pin, and the low-voltage inserthole assembly is configured for electrical connection to the low-voltage pin;
the socket further comprises a wiring harness electrically connected to the low-voltage inserthole assembly; and
the socket further comprises a first sealing gasket and a first cover, the first cover being provided on the first sealing gasket for pressing the first sealing gasket, the first sealing gasket being provided with a first through hole, the first cover being provided with a second through hole, and the wiring harness passing through the first through hole and the second through hole in sequence.

2. The socket of claim 1, wherein the first sealing gasket is provided with a plurality of first through holes, and the first cover is provided with a plurality of second through holes, the first through holes and the second through holes being equal in number.

3. The socket of claim 2, wherein the first through holes and the second through holes are arranged correspondingly in the first direction.

4. The socket of claim 2 or 3, wherein the first through hole and the second through hole have an axial distance D ≤ 0.3 mm.

5. The socket of any one of claims 1 to 4, wherein a wall of the second through hole protrudes from the first cover in the first direction.

6. The socket of any one of claims 1 to 5, wherein a wall height H of the second through hole satisfies: 3 mm ≤ H ≤ 5 mm.

7. The socket of any one of claims 1 to 6, wherein an inner wall of the first through hole is provided with a first protrusion.

8. The socket of any one of claims 1 to 7, wherein the socket further comprises a second cover covering the first cover.

9. The socket of any one of claims 1 to 8, wherein the socket further comprise a second housing and a third housing, the second housing and the third housing being connected to fix the low-voltage inserthole assembly, an accommodating groove being provided on a side of the second housing away from the third housing, the first sealing gasket being provided in the accommodating groove, and the first cover being fixed to the second housing.

10. The socket of claim 9, wherein the second housing is provided with an elastic first limiting member, and an included angle β between the first limiting member and the first direction is an acute angle; and the first housing is provided with a third through hole, a wall of the third through hole comprises a first wall extending in the first direction and a second wall extending in a second direction, and the first limiting member is engaged with the second wall.

11. The socket of claim 10, wherein the included angle β satisfies: 12° ≤ β ≤ 20°.

12. The socket of claim 10 or 11, wherein a length L of the second wall in the second direction satisfies: 0.7 mm ≤ L ≤ 1.5 mm.

13. An electrical connector, comprising a socket according to any one of claims 1 to 12 and a plug.

14. A battery pack, comprising a socket according to any one of claims 1 to 12.

15. An electric device, comprising a socket according to any one of claims 1 to 12.
